(19) Europäisches Patentamt
European Patent Office
Office européen des brevets

(11) EP 0 773 241 B1

(12) EUROPEAN PATENT SPECIFICATION

(45) Date of publication and mention of the grant of the patent:
**12.09.2001 Bulletin 2001/37**

(51) Int Cl.[7]: **C08F 10/00**, C08F 4/656

(21) Application number: **97101387.5**

(22) Date of filing: **31.01.1995**

# (54) Solid catalyst component for polymerizing olefins and catalyst for polymerization of olefins

Fester Katalysatorbestandteil für Olefinpolymerisation und Olefinpolymerisationskatalysator

Composant catalytique solide pour la polymérisation d'oléfines et catalyseur de polymérisation d'oléfines

(84) Designated Contracting States:
**AT BE DE ES FR GB IT NL PT**

(30) Priority:
**28.04.1994 JP 11375494**
**18.11.1994 JP 30996294**
**19.05.1994 JP 12959494**
**31.01.1994 JP 2734494**
**23.06.1994 JP 16449594**
**23.06.1994 JP 16449694**

(43) Date of publication of application:
**14.05.1997 Bulletin 1997/20**

(62) Document number(s) of the earlier application(s) in accordance with Art. 76 EPC:
**95101305.1 / 0 665 243**

(73) Proprietor: **TOHO TITANIUM CO., LTD.**
**Chigasaki-shi, Kanagawa 253 (JP)**

(72) Inventors:
- **Hosaka, Motoki**
  **Chigasaki-city, Kanagawa (JP)**
- **Goto, Kenji**
  **Yokohama-shi, Kanagawa, 253 (JP)**
- **Matsuo, Masahiko**
  **Chigasaki-shi, Kanagawa, 253 (JP)**
- **Kataoka, Takuo**
  **Chigasaki-shi, Kanagawa, 253 (JP)**
- **Masuyama, Takahiro**
  **Koya-gun, Kanagawa (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 093 494**
**EP-A- 0 171 155**
**EP-A- 0 530 814**
**US-A- 5 034 361**

Remarks:
The file contains technical information submitted after the application was filed and not included in this specification

EP 0 773 241 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

This invention relates to a solid catalyst component and to a catalyst for the polymerization of olefins.

More particularly, it relates to a solid catalyst component and to a catalyst for the polymerization of olefins with which an olefin polymer having high stereoregularity and broad molecular weight distribution can be obtained in high yield.

Hitherto, a large number of specific organosilicon compounds for use as an electron donor (external electron donor) as a component of a Ziegler-Natta catalyst or for use as an electron donor (internal electron donor) contained in a solid catalyst component of a Ziegler-Natta catalyst have been proposed for the purpose of producing polymers having improved stereoregularity or enhancing catalytic activity in olefin polymerization using the catalyst.

Various proposals have been made on processes for producing this kind of organosilicon compounds. For example, U.S. Patent 4,977,291 proposes a process for producing a silicon compound having at least one cycloalkyl group in which a silicon compound containing an aromatic group as a starting compound is hydrogenated in the presence of a catalyst, e.g., a Raney nickel catalyst.

U.S. Patent 4,958,041 discloses a process for producing a diorganodialkoxysilane having at least one branched alkyl group other than the two alkoxy groups in which a tetraalkoxysilane or a monoorganotrialkoxysilane is reacted with a Grignard reagent having the structural formula RMgX wherein R is an alkyl group or a cycloalkyl group and X is a halogen atom.

In JP-A-5-255350 is disclosed a cycloalkoxysilane represented by the formula $(R'O)_x(R')_ySi(OR)_{4-x-y}$ for use as an electron donor component of a Ziegler-Natta catalyst for olefin polymerization, wherein each R is independently selected from alkyl groups having 1 to 5 carbon atoms and acyl groups having 2 to 5 carbon atoms, each R' is independently selected from a cyclopentyl group, a cyclohexyl group, a cycloheptyl group, and substituted groups thereof, x is 1, 2, 3, or 4, and y is 0, 1, or 2. The term "JP-A" as used herein means an "unexamined published Japanese patent application." JP-A-5-310757 discloses tert-butoxycyclopentyldiethoxysilane as a novel silane compound and a process for producing the same.

For homo- or copolymerization of olefins a number of processes using a catalyst system comprising a solid catalyst component essentially containing magnesium, titanium, an electron donor compound, and a halogen, an organoaluminum compound, and an organosilicon compound have been proposed.

For example, JP-A-57-63310 and JP-A-57-63311 propose a process for polymerizing an olefin having 3 or more carbon atoms using a catalyst system comprising (a) a solid catalyst component containing a magnesium compound, a titanium compound and an internal electron donor, (b) an organoaluminum compound, and (c) an organosilicon compound having an Si-O-C bond. However, these processes are not always satisfactory for obtaining highly stereoregular polymers in high yield, and further improvement has been demanded.

On the other hand, JP-A-63-3010 discloses a catalyst system for the polymerization of olefins and a process for polymerizing olefins using the same, the catalyst system comprising (a) a solid catalyst component prepared by bringing a dialkoxymagnesium, an diester of aromatic dicarboxylic acid, an aromatic hydrocarbon, and a titanium halide into contact and subjecting the resulting product in a powdered state to a heat treatment, (b) an organoaluminum compound, and (c) an organosilicon compound.

JP-A-1-315406 discloses a catalyst system for olefin polymerization and a process for polymerizing an olefin using the same, the catalyst system comprising (a) a solid catalyst component prepared by bringing titanium tetrachloride into contact with a suspension of diethoxymagnesium in an alkylbenzene, adding phthalic acid dichloride thereto to react to obtain a solid product, and further contacting the resulting solid product with titanium tetrachloride in the presence of an alkylbenzene, (b) an organoaluminum compound, and (c) an organosilicon compound.

JP-A-2-84404 proposes a catalyst system for the polymerization of olefins and a process for homo- or copolymerizing an olefin(s) using the same, the catalyst system comprising (a) a solid titanium catalyst component essentially containing magnesium, titanium and a halogen which is prepared by bringing a magnesium compound and a titanium compound into contact, (b) an organoaluminum compound catalyst component, and (c) an organosilicon compound catalyst component containing a cyclopentyl group or a derivative thereof, a cyclopentenyl group or a derivative thereof, or a cyclopentadienyl group or a derivative thereof.

Each of these known techniques aims at such high catalytic activity that a step of removing residual catalyst components, such as chlorine and titanium, from the resulting polymer (a so-called de-ashing step) may be omitted and, at the same time, an improvement in yield of a stereoregular polymer or an improvement in durability of the catalytic activity for polymerization, and has achieved excellent results to their purpose.

In recent years, however, it has been pointed out that the olefin polymers obtained by polymerization using these catalyst systems comprising such a highly active catalyst component, an organoaluminum compound and an organosilicon compound have narrower molecular weight distribution as compared with those obtained by using conventional catalyst systems comprising a titanium trichloride type catalyst component in combination with an organoaluminum compound and, if desired, an electron donor compound as a third component. For polyolefins to have narrower

molecular weight distribution means poorer moldability, leading to less applicability.

Various manipulations have been suggested to solve this problem. For example, adoption of a multi-stage polymerization system has been proposed for obtaining polyolefins with broader molecular weight distribution. Nevertheless, a multi-stage polymerization system requires repetition of tedious and complicated operation of polymerization and also involves a step for recovery of a chelating agent to be used for polymerization and is not therefore deemed to be favorable from the considerations of labor and cost.

As the latest technique, JP-A-3-7703 discloses a process for polymerizing an olefin in the presence of a catalyst system comprising (a) a solid titanium catalyst component essentially containing magnesium, titanium, a halogen, and an internal electron donor, (b) an organoaluminum compound, and (c) at least two organosilicon compounds as an external electron donor. According to this process, a polyolefin having broad molecular weight distribution can be obtained without involving laborious multi-stage polymerization operation. However, the use of at least two organosilicon compounds as an electron donor for polymerization makes the process still tedious and complicated.

Further, solid catalyst components containing an aluminium halide, a magnesium compound and a titanium halide as essential components, and catalysts containing such a solid catalyst component, an organic aluminium compound and as the third component, an organic acid ester or a silicone compound are known. For example, JP-A-55-161807 discloses a catalyst comprising (i) a composition obtained by pulverizing magnesium chloride, an organic acid ester, a halogenated hydrocarbon and an aluminium halide together and then carrying out heat treatment with titanium tetrachloride, (ii) an organic aluminium compound, and (iii) an organic acid ester; and JP-A-61-31402 discloses a catalyst comprising (i) a solid catalyst component obtained by reacting a reaction product of an aluminium halide and a silicone compound with a magnesium compound and then reacting with a titanium halide and an ester of phthalic acid, (ii) an organic aluminium compound and (iii) a silicone compound.

Furthermore, solid catalyst components containing an alkoxyaluminium compound, a magnesium compound and a titanium halide as essential components, and catalysts for polymerization of olefins which contain such a solid catalyst component, an organic aluminium compound and as the third component, an organic acid ester or a silicone compound are also known. For example, JP-A-57-145104 discloses a catalyst component obtained by pulverizing magnesium chloride, an organic acid ester and an alkoxyaluminium compound together and then carrying out heat treatment with titanium tetrachloride; and JP-A-1-245002 discloses a catalyst comprising (i) a solid catalyst component obtained by bringing diethoxymagnesium into contact with titanium tetrachloride, followed by addition of an trialkoxyaluminium and then reacting with phthalic dichloride, (ii) an organic aluminium compound, and (iii) an epoxy-p-menthane compound.

These solid catalyst components and catalysts as described above have been developed as a result of studies for attaining high catalitic activity in polymerization of propylene so that the amount of the solid catalyst component can be minimized and the step of removing a catalyst residue (e.g., chlorine and titanium) remaining in a resulting polymer can be omitted, for improving the yield of a stereoregular polymer, or for improving durability of the catalitic activity for polymerization, and they provide good results for the respective objects. However, none of these catalysts can produce stereoregular polymers having a density of from 0.900 to 0.906 g/ml without lowering the yield of stereoregular polymers insoluble in a polymerization solvent as used in polymerization of olefins, particularly polymerization of propylene, according to the slurry method.

In the case where olefins, particularly propylene are polymerized by the slurry method in the presence of the aforesaid highly active catalyst, the resulting polymer has a high stereoregularity and is obtained in a high yield as compared with the case where a catalyst comprising a conventional titanium trichloride type solid catalyst component, an organic aluminium compound and an electron donor compound is used. However, the density of the resulting polymer tends to be higher than 0.906 g/ml, giving rise to various problems, e.g., breaking in rapid rolling rate and deterioration in transparency of a film product molded by a BOPP molding.

It has been known that the density of the resulting polymer can be controlled to some extent by lowering the polymerization temperature or introducing a small amount of ethylene as a comonomer into the polymerization system of olefins (particularly propylene) in the presence of the aforesaid highly active catalyst. In case of the slurry method, however, an undesirable phenomenon occurs that a low molecular weight polymer which is soluble in a polymerization solvent is formed at a high rate, and in the polymerization of propylene or copolymerization of propylene and ethylene, an atactic polypropylene which has an extremely poor stereoregularity is generated at a high rate. The atacticity can be evaluated in terms of the content of soluble portions of the resulting polymer or copolymer in a polymerization solvent, which is hereafter referred to "RDS" (the content of reactor diluent solubles).

Increase of the RDS in the slurry polymerization gives rise to problems with respect to the production cost of a polymer and the stability in operation because a reactor and a pipeline are stained, and an extraction step is required after separation of the particles of a resulting polymer from a polymerization solvent. Further, generation of fine powders contained in the resulting polymer, particularly those having a particle size of 100 micron or less, tend to cause clogging in a pipeline in the polymerization process, and other problems in the step of separation and drying of the polymer.

An object of the present invention is to provide a solid catalyst component and a catalyst for the polymerization

of olefins which can eliminate the above-mentioned problems associated with the conventional techniques, i.e., a catalyst system which exhibits high polymerization activity through simpler operation and provides an olefin polymer having broad molecular weight distribution while maintaining a satisfactory yield of a highly stereoregular polymer.

As a result of extensive investigations, the present inventors have found that an olefin polymer having high stereoregularity and broad molecular weight distribution can be obtained in high yield by polymerizing an olefin(s) in the presence of a catalyst comprising (A) a specific solid catalyst component, (B) an organoaluminum compound, and (C) an organosilicon compound. The present invention has been completed based on this finding.

The present invention provides a solid catalyst component for polymerizing olefins, said catalyst component being obtainable by a process comprising contacting the following substances (a) to (d) in the following contact orders (1) to (5):

(a) a dialkoxymagnesium represented by $Mg(OR^6)_2$. wherein $R^6$ represents a straight chain or branched chain alkyl group or an aryl group;
(b) an aluminum compound represented by $Al(OR^7)_mX^2{}_{3-m}$, wherein $R^7$ represents a straight chain or branched chain alkyl group; $X^2$ represents a halogen atom; and m is 0 or integer of 1 to 3;
(c) titanium tetrachloride; and
(d) a diester of aromatic dicarboxylic acid,

(1) the substances (c) is contacted to a product obtained by contacting the substances (a), (b), (c) and (d);
(2) the substance (d) is contacted to a product obtained by contacting the substances (a), (b) and (c) in advance, and then the substance (c) is further contacted;
(3) the substance (b) is contacted to a product obtained by contacting the substances (a), (c) and (d) in advance, and then the substance (c) is further contacted.
(4) the substance (b) is contacted to a product obtained by contacting the substances (a), (c) and (d) in advance, and then the substances (b) and (c) are further contacted; and
(5) the substances (b) and (c) are contacted to a product obtained by contacting the substances (a), (b), (c) and (d) in advance.

The present invention further provides a catalyst for the polymerization of olefins comprising the above solid catalyst component, an organoaluminum compound, and an organosilicon compound.

Fig. 1 is a chart showing the results of MS with which cyclohexylcyclopentyldimethoxysilane was identified.

Fig. 2 is a chart showing the results of two-dimensional analysis by $^1H$-NMR/$^{13}C$-NMR (COSY spectrum) with which cyclohexylcyclopentyldimethoxysilane was identified.

Fig. 3 is a chart showing the results of IR with which cyclohexylcyclopentyldimethoxysilane was identified.

The solid catalyst component (A) is prepared using substances (a) to (d) and optionally substance (e):

(a) a dialkoxymagnesium represented by $Mg(OR^6)_2$ wherein $R^6$ represents a straight chain or branched chain alkyl group or an aryl group;
(b) an aluminium compound represented by $Al(OR^7)_mX^2{}_{3-m}$ wherein $R^7$ represents a straight chain or branched chain alkyl group, $X^2$ represents a halogen atom, and m is 0 or an integer of 1 to 3;
(c) titanium tetrachloride;
(d) a diester of aromatic dicarboxylic acid; and
(e) a dimethyl polysiloxane.

The dialkoxymagnesium (substance (a)) represented by $Mg(OR^6)_2$ used in the preparation of the solid catalyst component preferably has a straight chain or branched chain alkyl group having up to 10 carbon atoms, more preferably 2 to 4 carbon atoms, or an aryl group for $R^6$. Examples of substance (a) includes diethoxymagnesium, dipropoxymagnesium, dibutoxymagnesium, and diphenoxymagnesium, with diethoxymagnesium being preferred.

The dialkoxymagnesium, which can be used preferably, is at least one dialkoxymagnesium species having from 1 to 3 carbon atoms in the alkoxy moiety thereof and has a granular or powdered form, the particles of which may have an irregular shape or a spherical shape. In using spherical particles of diethoxymagnesium, for example, the resulting powdered polymer will have a more satisfactory particle shape and a narrower particle size distribution. As a result, the polymer powder as produced has improved handling properties, and troubles attributed to fine particles, such as obstruction, would be eliminated.

The spherical diethoxymagnesium particles as above referred to do not necessarily need to be true spheres, and ellipsoidal or potato-like particles may also be used. The terminology "spherical" as used herein may be quantified as a Longer axis diameter ($\ell$) to shorter axis diameter (w) ratio ($\ell$/w) of not more than 3, preferably from 1 to 2, and still preferably from 1 to 1.5.

The dialkoxymagnesium to be used has an average particle size of from 1 to 200 μm, preferably from 5 to 150 μm.

In the case of spherical diethoxymagnesium, it has an average particle size of from 1 to 100 μm, preferably from 5 to 50 μm, more preferably from 10 to 40 μm. It is preferable to use particles having a sharp size distribution with a small proportion of fine or coarse particles. More specifically, particles containing not more than 20%, preferably not more than 10%, of fine particles of 5 μm or smaller and not more than 10%, preferably not more than 5%, of coarse particles of 100 μm or greater. Such a particle size distribution corresponds to in ($D_{90}/D_{10}$) of not more than 3, preferably not more than 2, wherein $D_{90}$ and $D_{10}$ represent a cumulative 90% diameter and a cumulative 10% diameter, respectively, of a cumulative particle size distribution depicted from the small diameter side.

The above-mentioned dialkoxymagnesium does not always need to be present as a starting material in the preparation of solid catalyst component (A). For example, it may be prepared in situ from metallic magnesium and an alcohol in the presence of a catalyst, e.g., iodine at the time of preparing solid catalyst component (A).

The aluminium compound represented by $Al(OR^7)_mX^2_{3-m}$ (substance (b)) used in the preparation of the solid catalyst component (A) preferably has a straight chain or branched chain alkyl group having up to 10 carbon atoms, more preferably up to 5 carbon atoms, for $R^7$, such as trihalogenated aluminium, halogenated alkoxyaluminium and trialkoxyaluminium. Examples of trihalogenated aluminium include aluminium trichloride, aluminium tribromide and aluminium triiodide, with aluminium trichloride being preferred. Examples of halogenated alkoxyaluminium includes diethoxychloroaluminium, ethoxy-dichloroaluminium, diisopropoxychloroaluminium, isopropoxydichloroaluminium, dibutoxychloroaluminium, and butoxy-dichloroaluminium, with ethoxydichloroaluminium, diiso-propoxychloroaluminium, and isopropoxydichloroaluminium being prepared. Examples of trialkoxyaluminium include trimethoxyaluminium, triethoxyaluminium, tripropoxyaluminium, triisopropoxyaluminium, tributoxyaluminium, and triisobutoxyaluminium, with triethoxyaluminium and triisopropoxyaluminium being preferred. These aluminium compounds may be used independently or as admixture thereof.

The aromatic dicarboxylic diester substance (d) used in the preparation of the solid catalyst component (A) is preferably a phthalic diester. The ester moiety thereof is preferably a straight chain or branched chain alkyl group having up to 15 carbon atoms, more preferably 2 to 12 carbon atoms. Examples of phthalic diester include dimethyl phthalate, diethyl phthalate, di-n-propyl phthalate, diisopropyl phthalate, di-n-butyl phthalate, di-iso-butyl phthalate, ethylmethyl phthalate, butylethyl phthalate, methyl(iso-propyl) phthalate, ethyl-n-propyl phthalate, ethyl-n-butyl phthalate, di-n-pentyl phthalate, di-iso-pentyl phthalate, di-n-hexyl phthalate, di-n-heptyl phthalate, di-n-octyl phthalate, bis (2-methylhexyl) phthalate, bis(2-ethylhexyl) phthalate, di-n-nonyl phthalate, di-iso-decyl phthalate, bis(2,2-dimethylheptyl) phthalate, n-butyl(iso-hexyl) phthalate, ethyl(iso-octyl) phthalate, n-butyl(iso-octyl) phthalate, n-pentyl(n-hexyl) phthalate, n-pentyl(iso-hexyl) phthalate, iso-pentyl(n-heptyl) phthalate, n-pentyl(iso-octyl) phthalate, n-pentyl(iso-nonyl) phthalate, iso-pentyl(n-decyl) phthalate, n-pentyl(n-undecyl) phthalate, iso-pentyl(iso-hexyl) phthalate, n-hexyl(iso-octyl) phthalate, n-hexyl(iso-nonyl) phthalate, n-hexyl(n-decyl) phthalate, n-heptyl(iso-octyl) phthalate, n-heptyl(iso-nonyl) phthalate, n-heptyl(neo-decyl) phthalate, and iso-octyl(iso-nonyl) phthalate. At least one of them is used. Of these, diethyl phthalate, di-n-propyl phthalate, di-n-butyl phthalate, di-iso-butyl phthalate, and bis(2-ethylhexyl) phthalate are preferred. These phthalic diesters may be used independently or as admixture thereof.

The dimethyl polysiloxane (e) (substance (e)) is an optional component constituting the solid catalyst component (A) and is preferably a polymer silicone compound represented by the following formula

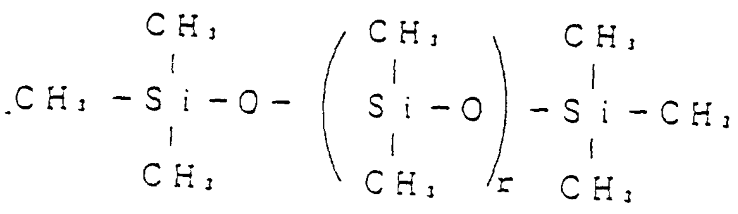

wherein r is 1,000 to 30,000. The dimethyl polysiloxane has a viscosity of 5 to 1,000 centistokes, preferably 10 to 500 centistokes, at a room temperature.

The solid catalyst component can be prepared by contacting the substance (a), the substance (b), titanium tetrachloride referred to as the "substance (c)") and the substance (d); or the substance (a), the substance (b), the substance (c), the substance (d) and the substance (e), in the presence or absence of an inert organic solvent. For easy operation, the processing is preferably carried out in the presence of the solvent. The inert organic solvent used includes saturated hydrocarbon such as hexane, heptane and cyclohexane; aromatic hydrocarbon such as benzene, toluene, xylene and ethylbenzene; and halogenated hydrocarbon such as odichlorobenzene, methylene chloride, carbon tetrachloride, and dichloroethane. Among these, aromatic hydrocarbons having a boiling point of 90 to 150°C are

preferably used.

The used amount of the respective substances are 0.01 to 10 g, preferably 0.05 to 2.0 g for the substance (b), 0.1 to 200 ml, preferably 0.5 to 100 ml for the substance (c), 0.01 to 1.0 g, preferably 0.1 to 0.5 g for the substance (d), and 0.05 to 5.0 ml, preferably 0.1 to 1.0 ml for the substance (e), each based on 1 g of the substance (a). The amount of the inert organic solvent is not specifically limited, and it is preferably from 1 to 10 mℓ per 1 mℓ of the substance (c) for easy operation.

The contact of the respective substances is carried out in a vessel equipped with a stirrer under an inert gas atmosphere in a moisture-free condition while stirring. The contact temperature may be a relatively low temperature close to room temperature in the case of simply contacting by way of stirring and mixing the substances or in case of dispersing or suspending the substances in an inert organic solvent. In case of reacting the substances after contact to obtain a reaction product, the temperature is preferably from 40 to 130°C. If the temperature is less than 40°C, the reaction does not sufficiently proceed, and the resulting solid catalyst component may not exhibit sufficient catalitic performances. If the temperature is higher than 130°C, the solvent is markedly evaporated so that the reaction becomes unstable. The reaction time is preferably 1 minute or more, more preferably 10 minutes or more, and most preferably 30 minutes or more.

Preferred contact orders of the respective substances in the present invention are as follows:

(1) the substance (c) is contacted to a product obtained by contacting the substances (a), (b), (c) and (d);
(2) the substance (d) is contacted to a product obtained by contacting the substances (a), (b) and (c) in advance, and then the substance (c) is further contacted;
(3) the substance (b) is contacted to a product obtained by contacting the substances (a), (c) and (d) in advance, and then the substance (c) is further contacted,
(4) the substance (b) is contacted to a product obtained by contacting the substances (a), (c) and (d) in advance, and then the substances (b) and (c) are further contacted;
(5) the substances (b) and (c) are contacted to a product obtained by contacting the substances (a), (b), (c) and (d) in advance;
(6) the substance (c) is contacted to a product obtained by contacting the substances (a), (b), (c), (d) and (e);
(7) the substances (d) and (e) are contacted to a product obtained by contacting the substances (a), (b) and (c) in advance, and then the substance (c) is further contacted;
(8) the substance (b) is contacted to a product obtained by contacting the substances (a), (c), (d) and (e) in advance, and then the substance (c) is further contacted;
(9) the substance (b) is contacted to a product obtained by contacting the substances (a), (c), (d) and (e) in advance, and then the substances (b) and (c) are further contacted; and
(10) the substances (b) and (c) are contacted to a product obtained by contacting the substances (a), (b), (c), (d) and (e).

The contact condition in the case of contacting the substance (b) and/or the substance (c) in the later stage is preferably that the substance (b) and/or the substance (c) are added as they are, or diluted by the inert organic solvent described above and then added (the latter being preferably) to the product, and allowed to stand at a temperature of 40 to 130°C for 1 minute or more, preferably 10 minutes or more, and more preferably 30 minutes or more. A ratio of the substance (b) to the substance (c), when both are added to the product, may be the same or different as that in the contact and reaction at the former stage (to form the product). The product obtained by the contact and reaction in the former stage may be washed with the inert organic solvent described above, and again contacted with the substance (b) and/or the substance (c).

By the use of the solid catalyst component of the present invention, in polymerization of olefins, particularly polymerization of propylene, a stereoregular polymer having a low density of 0.900 to 0.906 g/ml can be produced stably at a low RDS of 3% or less (preferably 2% or less). Further, the yield of the polymer per unit amount of the resulting catalyst is high, that is, the resulting catalyst has a high polymerization activity and exhibits excellent performances in terms of catalitic life and reduction of a fine powder content in the resulting polymer.

Organoaluminum compound (B) which can be used in the present invention includes compounds represented by $R^5_yAlY_{3-y}$, wherein $R^5$ represents a straight chain or branched chain alkyl group, preferably having from up to 15 carbon atoms, more preferably up to 5 carbon atoms; Y represents a hydrogen atom, a halogen atom, or an alkoxyl group preferably having up to 4 carbon atoms; and y represents a real number of 1 to 3.

Specific examples of organoaluminum compound (B) include trialkylaluminiums such as triethylaluminium and triisobutylaluminium; dialkylaluminium halides such as diethylaluminium bromide, diethylaluminium chloride and dibutylaluminium chloride; alkylaluminium sesquihalides such as ethylaluminium sesquichloride and butylaluminium sesquichloride; alkylaluminium alkoxides such as diethylaluminium ethoxide and dibutylaluminium butoxide; alkylaluminium hydrides such as diethylaluminium hydride, dibutylaluminium hydride and ethylaluminium hydride; and a mixture thereof. Of these, triethylaluminium and triisobutylaluminium are preferred.

The organosilicon compound (C) may be represented by formula (I):

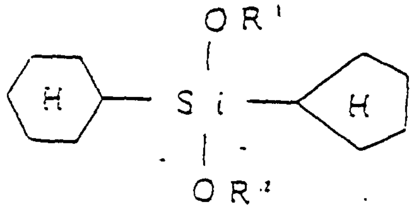

(I)

wherein $R^1$ and $R^2$, which may be the same or different, each represents an alkyl group having from 1 to 3 carbon atoms; and the cyclohexyl

( 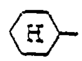 )

group and the cyclopentyl

( 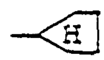 )

group may be substituted.

The compound represented by formula (I) is an asymmetric organosilicon compound having a cyclohexyl group or a derivative thereof and a cyclopentyl group or a derivative thereof both directly bonded to the silicon atom. The cyclohexyl group and the cyclopentyl group may be substituted with an alkyl group preferably having 1 to 3 carbon atoms or a halogen atom. The number of substituent on each ring is preferably not more than two.

Examples of the alkyl group for $R^1$ and $R^2$ in formula (I) include methyl, ethyl, n-propyl, and isopropyl. Of these, methyl and ethyl are preferred.

The organosilicon compound, which is represented by formula (I) described above, is a cyclohexylcyclopentyldialkoxysilane. Examples of the cyclohexylcyclopentyldialkoxysilane include cyclohexylcyclopentyl-dimethoxysilane, cyclchexylcyclopentyldiethoxysilane, cyclo-hexylcyclopentyldi-n-propoxysilane, and cyclohexylcyclopentyl-diisopropoxysilane. Of these, cyclohexylcyclopentyldimethoxysilane and cyclohexylcyclopentyldiethoxysilane are preferred organosilicon compounds for use as an electron donor serving as a component of an olefin polymerization catalyst.

Various derivatives of these asymmetric organosilicon compounds are included within the scope of formula (I). In particular, those having one or two substituents, such as a methyl group, chlorine or bromine, at the 3-, 4- or 5-position of the cyclohexyl group thereof and/or one or two substituents as exemplified above at the 2-, 3- or 5-position of the cyclopentyl group thereof are preferred. Two substituents may be at the same position of the cyclohexyl or cyclopentyl group. Plurality of the substituents on the same ring may be the same or different.

Specific examples of the derivatives of the asymmetric organosilicon compounds are 3-methylcyclohexylcyclopentyl-dimethoxysilane, 3-methylcyclohexylcyclopentyldiethoxysilane, 3-methylcyclohexylcyclopentyldipropoxysilane, 4-methylcyclohexylcyclopentyldimethoxysilane, 4-methylcyclohexylcyclopentyldiethoxysilane, 4-methylcyclohexylcyclopentyldipropoxysilane, 3,5-dimethylcyclohexylcyclopentyldimethoxysilane, 3,5-dimethylcyclohexylcyclopentyldiethoxysilane, 3,5-dimethylcyclohexylcyclopentyldipropoxysilane, 3,3-dimethylcyclohexylcyclopentyldimethoxysilane,4,4-dimethylcyclohexylcyclopentyldimethoxysilane, cyclohexyl-2-methylcyclopentyldimethoxysilane, cyclohexyl-2-methylcyclopentyldiethoxysilane, cyclohexyl-2-methylcyclopentyldipropoxysilane, 3-methylcyclohexyl-2-methylcyclopentyldimethoxysilane, 3-methylcyclohexyl-2-methylcyclopentyldiethoxysilane, 3-methylcyclohexyl-2-methylcyclopentyldipropoxysilane, 4-methylcyclohexyl-2-methylcyclopentyldimethoxysilane, 4-methylcyclohexyl-2-methylcyclopentyldiethoxysilane, 4-methylcyclohexyl-2-methylcyclopentyldipropoxysilane, 3,5-dimethylcyclohexyl-2-methylcyclopentyldimethoxysilane, 3,5-dimethylcyclohexyl-2-methylcyclopentyldiethoxysilane, 3,5-dimethylcyclohexyl-2-methylcyclopentyldipropoxysilane, 3,3-dimethylcyclohexyl-2-methylcyclopentyldimethoxysilane, 4,4-dimethylcyclohexyl-2-methylcyclopentyldimethoxysilane, cyclohexyl-3-methylcyclopentyldimethoxysilane, cyclohexyl-3-methylcyclopentyldiethoxysilane, cyclohexyl-3-methylcyclopentyldipropoxysilane,3-methylcyclohexyl-3-methylcyclopentyldimethoxysilane, 3-methylcyclohexyl-3-methylcyclopentyldiethoxysilane, 3-methylcyclohexyl-3-methylcyclopentyldipropoxysilane, 4-methylcyclohexyl-3-methylcyclopentyldimethoxysilane, 4-methylcyclohexyl-3-methylcyclopentyldiethoxysilane, 4-methylcyclohexyl-3-methylcyclopentyldipropoxysilane, 3,5-dimethylcyclohexyl-3-methylcyclopentyldimethoxysilane, 3,5-dimethylcyclohexyl-3-methylcyclopentyldiethoxysilane, 3,5-dimethylcyclohexyl-3-methylcyclopentyldipropoxysilane, 3,3-dimethylcyclohexyl-3-methylcyclopentyldimethoxysilane, 4,4-dimethylcyclohexyl-3-methylcyclopentyldimethoxysilane, cyclohexyl-2,3-dimethylcyclopentyldimethoxysilane, cyclohexyl-2,3-dimethylcyclopentyldiethoxysilane, cyclohexyl-2,3-dimethylcyclopentyldipropoxysilane, 3-methylcyclohexyl-2,3-dimethylcyclopentyldimethoxysilane, 3-methylcyclohexyl-2,3-dimethylcyclopentyldiethoxysilane, 3-methylcyclohexyl-2,3-dimethylcyclopentyldipropoxysilane, 4-methylcyclohexyl-2,3-dimethylcyclopentyldimethoxysilane, 4-methylcyclohexyl-2,3-dimethylcyclopentyldiethoxysilane, 4-methylcyclohexyl-2,3-dimethylcyclopentyldipropoxysilane, 3,5-dimethylcyclohexyl-2,3-dimethylcyclopentyldimethoxysilane, 3,5-dimethylcyclohexyl-2,3-dimethylcyclopentyldiethoxysilane,3,5-dimethylcyclohexyl-2,3-dimethylcyclopentyldipropoxysilane, 3,3-dimethylcyclohexyl-2,3-dimethylcyclopentyldimethoxysilane, 4,4-dimethylcyclohexyl-2,3-dimethylcyclopentyldimethoxysilane, cyclohexyl-2,5-dimethylcyclopentyldimethoxysilane, cyclohexyl-2,5-dimethylcyclopentyldiethoxysilane, cyclohexyl-2,5-dimethylcyclopentyldipropoxysilane, 3-methylcyclohexyl-2,5-dimethylcyclopentyldimethoxysilane, 3-methylcyclohexyl-2,5-dimethylcyclopentyldiethoxysilane, 3-methylcyclohexyl-2,5-dimethylcyclopentyldipropoxysilane, 4-methylcyclohexyl-2,5-dimethylcyclopentyldimethoxysilane, 4-methylcyclohexyl-2,5-dimethylcyclopentyldiethoxysilane, 4-methylcyclohexyl-2,5-dimethylcyclopentyldipropoxysilane, 3,5-dimethylcyclohexyl-2,5-dimethylcyclopentyldimethoxysilane, 3,5-dimethylcyclohexyl-2,5-dimethylcyclopentyldiethoxysilane,3,5-dimethylcyclohexyl-2,5-dimethylcyclopentyldipropoxysilane, 3,3-dimethylcyclohexyl-2,5-dimethylcyclopentyldimethoxysilane, 4,4-dimethylcyclohexyl-2,5-dimethylcyclopentyldimethoxysilane, cyclohexyl-2,2-dimethylcyclopentyldimethoxysilane, cyclohexyl-2,2-dimethylcyclopentyldiethoxysilane, cyclohexyl-2,2-dimethylcyclopentyldipropoxysilane, 3-methylcyclohexyl-2,2-dimethylcyclopentyldimethoxysilane, 3-methylcyclohexyl-2,2-dimethylcyclopentyldiethoxysilane, 3-methylcyclohexyl-2,2-dimethylcyclopentyldipropoxysilane, 4-methylcyclohexyl-2,2-dimethylcyclopentyldimethoxysilane, 4-methylcyclohexyl-2,2-dimethylcyclopentyldiethoxysilane, 4-methylcyclohexyl-2,2-dimethylcyclopentyldipropoxysilane, 3,5-dimethylcyclohexyl-2,2-dimethylcyclopentyldimethoxysilane, 3,5-dimethylcyclohexyl-2,2-dimethylcyclopentyldiethoxysilane, 3,5-dimethylcyclohexyl-2,2-dimethylcyclopentyldipropoxysilane, 3,3-dimethylcyclohexyl-2,2-dimethylcyclopentyldimethoxysilane, 4,4-dimethylcyclohexyl-2,2-dimethylcyclopentyldimethoxysilane, cyclohexyl-3,3-dimethylcyclopentyldimethoxysilane, cyclohexyl-3,3-dimethylcyclopentyldiethoxysilane, cyclohexyl-3,3-dimethylcyclopentyldipropoxysilane, 3-methylcyclohexyl-3,3-dimethylcyclopentyldimethoxysilane, 3-methylcyclohexyl-3,3-dimethylcyclopentyldiethoxysilane, 3-methylcyclohexyl-3,3-dimethylcyclopentyldipropoxysilane, 4-methylcyclohexyl-3,3-dimethylcyclopentyldimethoxysilane, 4-methylcyclohexyl-3,3-dimethylcyclopentyldiethoxysilane, 4-methylcyclohexyl-3,3-dimethylcyclopentyldipropoxysilane, 3,5-dimethylcyclohexyl-3,3-dimethylcyclopentyldimethoxysilane, 3,5-dimethylcyclohexyl-3,3-dimethylcyclopentyldiethoxysilane, 3,5-dimethylcyclohexyl-3,3-dimethylcyclopentyldipropoxysilane, 3,3-dimethylcyclohexyl-3,3-dimethylcyclopentyldimethoxysilane, 4,4-dimethylcyclohexyl-3,3-dimethylcyclopentyldimethoxysilane, 3-chlorocyclohexylcyclopentyldimethoxysilane, 4-chlorocyclohexylcyclopentyldimethoxysilane, 3,5-dichlorocyclohexylcyclopentyldimethoxysilane, cyclohexyl-2-chlorocyclopentyldimethoxysilane, cyclohexyl-3-cyclopentyldimethoxysilane, cyclohexyl-2,3-dichlorocyclopentyldimethoxysilane, cyclohexyl-2,5-dichlorocyclopentyldimethoxysilane, 3-chlorocyclohexyl-2-chlorocyclopentyldimethoxysilane, 4-chlorocyclohexyl-3-chlorocyclopentyldimethoxysilane, and 3,5-dichlorocyclohexyl-2,3-dichlorocyclopentyldimethoxysilane.

Preferred of these asymmetric organosilicon compounds are cyclohexylcyclopentyldimethoxysilane, cyclohexylcyclopentyldiethoxysilane, 3-methylcyclohexylcyclopentyldimethoxysilane, 4-methylcyclohexylcyclopentyldimethoxysilane, and 3,5-dimethylcyclohexylcyclopentyldimethoxysilane. These organosilicon compounds may be used either individually or in combination of two or more thereof.

The organosilicon compound used in the present invention is useful as an (internal and/or external) electron donor for various olefin polymerization catalysts. Namely, the organosilicon compound can be used as an electron donor in the homo- or copolymerization of ethylene, propylene, 1-butene, 1-pentene, 4-methyl-1-pentene, vinylcyclohexane, etc. In particular, the organosilicon compound is suitable for use as an electron donor of a catalyst for the homopolymerization of ethylene or propylene or the copolymerization of ethylene and propylene, and the optimal use thereof is as an electron donor of a catalyst for the homopolymerization of propylene or the copolymerization of propylene and ethylene.

The cyclohexylcyclopentyldialkoxysilane used in the present invention can be prepared by various methods. In one of the simplest methods, the organosilicon compound is obtained by the reaction of a monocycloalkyltrialkoxysilane (i.e., monocyclohexyl- or monocyclopentyl-trialkoxysilane) with a cycloalkyl Grignard reagent (i.e., a Grignard reagent having a cyclopentyl or cyclohexyl group, respectively).

For example, cyclopentyl chloride (commercial product) is first reacted with magnesium in the presence of a solvent, e.g., an ether such as tetrahydrofuran, diethyl ether, or di-n-butyl ether, to yield a cyclopentyl Grignard reagent (cyclopentylmagnesium chloride). This reaction may be carried out at a temperature of from room temperature to 60°C. The cyclopentyl Grignard reagent is then reacted with cyclohexyltrimethoxysilane to obtain cyclohexylcyclopentyldimethoxysilane; this reaction may be conducted in the presence of an ether such as tetrahydrofuran, diethyl ether, or di-n-butyl ether as in the above-described first reaction, or in the presence of an aliphatic hydrocarbon solvent such as hexane or heptane or an aromatic hydrocarbon solvent such as toluene, benzene, or xylene. This reaction may be carried out at a temperature of from 50°C to 200°C, preferably at a temperature of from 100°C to 200°C or at a temperature of from 100°C to 200°C under boiling or refluxing of the solvent.

Although the monocycloalkyltrialkoxysilane, e.g., cyclohexyltrimethoxysilane employed above, for use in the above reaction may be a commercial product, it may be prepared by various known methods. In one method, the desired compound is prepared by reacting cyclohexyltrichlorosilane with methanol to alkoxylate the silane compound with the evolution of hydrogen chloride. Although the cyclohexyltrichlorosilane for use in this reaction may be a commercial product, it may be easily prepared by the hydrosilylation reaction of cyclohexene with trichlorosilane ($HSiCl_3$). Another method for preparing cyclohexyltrimethoxysilane comprises hydrogenating a commercial product of phenyltrimethoxysilane in the presence of a catalyst, e.g., a Raney nickel catalyst.

The cyclohexylcyclopentyldimethoxysilane thus produced can be identified by nuclear magnetic resonance spectroscopy ($^1$H-NMR, $^{13}$C-NMR), infrared absorption spectrometry (IR), mass spectrometry (MS), etc. $^{13}$C-NMR spectrometry (in $CDCl_3$) gives a spectrum which has a signal at $\delta$ = 50.7 attributable to the carbon atoms of the methoxy groups, signals at $\delta$ = 24.5, 26.8, 26.9, and 27.8 attributable to the cyclohexyl group, and signals at $\delta$ = 22.8, 26.7, and 27.4 attributable to the cyclopentyl group. IR spectrometry gives a spectrum having a peak at around 1,100 $cm^{-1}$ attributable to the Si-O-C bonds.

The organosilicon compound of formula (I), i.e., a cyclohexylcyclopentyldialkoxysilane, when used as an electron donor serving as one component of a Ziegler-Natta catalyst for olefin polymerization, makes it possible to obtain a polyolefin having a broad molecular weight distribution and high crystallinity while retaining high performances with respect to catalytic activity and the yield of highly stereoregular polymer which performances are not lower than those conventionally known as high-performance catalysts.

Moreover, an organosilicon compound other than those represented by formula. (I) may be used as component (C).

Such an organosilicon compound (referred to as "component (Cl)) which can be used as component (C) is a compound represented by $R^{18}{}_sSi(OR^{19})_{4-s}$. In the formula, $R^{18}$ is a straight chain or branched chain alkyl group preferably having up to 20 carbon atoms, more preferably up to 12 carbon atoms, a cycloalkyl group, an aryl group or a vinyl group, and the plurality of $R^{18}$ may be the same or different, $R^{19}$ represents a straight chain or branched chain alkyl group preferably having up to 10 carbon atoms, more preferably up to 5 carbon atoms, and s is 0, or an integer of 1 to 3. Examples of component (C1) include phenyl alkoxysilanes, alkyl alkoxysilanes, phenyl alkyl alkoxysilanes, cycloalkyl alkoxysilanes, and cycloalkyl alkyl alkoxysilanes.

To concretely exemplify the component (C1) described above, preferred are trimethyl methoxysilane, trimethyl ethoxysilane, tri-n-propyl methoxysilane, tri-n-propyl ethoxysilane, tri-n-butyl methoxysilane, tri-iso-butyl methoxysilane, tri-t-butyl methoxysilane, tri-n-butyl ethoxysilane, tricyclohexyl methoxysilane, tricyclohexyl ethoxysilane, dimethyl dimethoxysilane, dimethyl diethoxysilane, di-n-propyl dimethoxysilane, di-iso-propyl dimethoxysilane, di-n-propyl diethoxysilane, di-iso-propyl diethoxysilane, di-n-butyl dimethoxysilane, di-iso-butyl dimethoxysilane, di-t-butyl dimethoxysilane, di-n-butyl diethoxysilane, n-butyl methyl dimethoxysilane, bis(2-ethylhexyl) dimethoxysilane, bis(2-ethylhexyl) diethoxysilane, dicyclohexyl dimethoxysilane, dicyclohexyl diethoxysilane, dicyclopentyl dimethoxysilane, dicyclopentyl diethoxysilane, cyclohexyl methyl dimethoxysilane, cyclohexyl methyl diethoxysilane, cyclohexyl ethyl dimethoxysilane, cyclohexyl isopropyl dimethoxysilane, cyclohexyl ethyl diethoxysilane, cyclopentyl ethyl diethoxysilane, cyclopentyl isopropyl dimethoxysilane, cyclohexyl(n-pentyl) dimethoxysilane, cyclopentyl isobutyl dimethoxysilane, cyclohexyl(n-pentyl) diethoxysilane, cyclohexyl(n-propyl) dimethoxysilane, cyclohexyl(n-butyl) dimethoxysilane, cyclohexyl(n-propyl) diethoxysilane, cyclohexyl(n-butyl) diethoxysilane, diphenyl dimethoxysilane, diphenyl diethoxysilane, phenyl methyl dimethoxysilane, phenyl methyl diethoxysilane, phenyl ethyl dimethoxysilane, phenyl ethyl diethoxysilane, cyclohexyl dimethyl methoxysilane, cyclohexyl dimethyl ethoxysilane, cyclohexyl diethyl methoxysilane, cyclohexyl diethyl ethoxysilane, 2-ethylhexyl trimethoxysilane, 2-ethylhexyl triethoxysilane, methyl trimethoxysilane, methyl triethoxysilane, ethyl trimethoxysilane, ethyl triethoxysilane, n-propyl trimethoxysilane, n-propyl triethoxysilane, iso-propyl trimethoxysilane, iso-propyl triethoxysilane, n-butyl trimethoxysilane, iso-butyl trimethoxysilane, t-butyl trimethoxysilane, n-butyl triethoxysilane, cyclohexyl trimethoxysilane, cyclohexyl triethoxysilane, cyclopentyl trimethoxysilane, cyclopentyl triethoxysilane, vinyl trimethoxysilane, vinyl triethoxysilane, 2-ethylhexyl trimethoxysilane, 2-ethylhexyl triethoxysilane, phenyl trimethoxysilane, phenyl triethoxysilane, tetramethoxy silane and tetraethoxy silane, as well as cyclohexyl cyclopentyl dimethoxysilane. Of these, di-n-propyl dimethoxysilane, di-iso-propyl dimethoxysilane, di-n-butyl dimethoxysilane, di-iso-butyl dimethoxysilane, di-t-butyl dimethoxysilane, di-n-butyl diethoxysilane, t-butyl trimethoxysilane, dicyclohexyl dimethoxysilane, dicyclohexyl diethoxysilane, cyclohexyl dimethoxysilane, cyclohexyl methyl diethoxysilane, cyclohexyl ethyl dimethoxysilane, cyclohexyl ethyl diethoxysilane, dicyclopentyl dimethoxysilane, dicyclopentyl diethoxysilane, cyclopentyl methyl diethoxysilane, cyclopentyl ethyl diethoxysilane, and tetraethoxysilane are preferably used, as well as cyclohexyl cyclopentyl dimethoxysilane. These silicone compounds may be

used independently or as admixture thereof.

It is preferred to wash the solid catalyst component (A) in the inert organic solvent such as heptane, whereby unreacted substances can be removed. With or without drying, the washed component (A) is mixed with the organic aluminium compound (B) and the silicone compound (C) as described in detail above, to thereby form the catalyst for polymerizing olefins of the present invention.

In preparation of the polymerization catalyst, the component (B) is used in an amount of 1 to 1000 moles, preferably 50 to 500 moles per mole of the titanium atom contained in the solid catalyst component (A), and the component (C) is used in an amount of 0.0020 to 2 moles, preferably 0.01 to 0.5 mole per mole of the component (B). The solid catalyst component (A) used in the catalyst of the present invention generally has a Ti content of 0.5 to 15% by weight and preferably 1 to 7% by weight.

The catalyst of the present invention can be prepared by bringing the above-described components (A), (B) and (C) into contact. There is no particular limitation on the order in contact of the components (A), (B) and (C). In general, the component (B) is brought into contact with the component (C) and subsequently with the component (A), or the component (B) is brought into contact with the component (A) and subsequently with the component (C).

Recommended combinations of the components (A), (B), and (C) are tabulated in Table 1 below.

TABLE 1

| Solid Catalyst Component (A) (Process of Preparation) | Organo-aluminum Compound (B) | Organosilicon Compound (C) |
|---|---|---|
| process (4) | triethyl-aluminum | cyclohexylcyclopentyl-dimethoxysilane |
| process (4) | triethyl-aluminum | 3-methylcyclohexyl-cyclopentyldimethoxysilane |
| process (5) | triethyl-aluminum | cyclohexylcyclopentyl-dimethoxysilane |
| process (6) | triethyl-aluminum | cyclohexylcyclopentyl-dimethoxysilane |
| process (6) | triethyl-aluminum | 4-methylcyclohexyl-cyclopentyldimethoxysilane |
| process (7) | triethyl-aluminum | cyclohexylcyclopentyl-dimethoxysilane |
| process (7) | triethyl-aluminum | 3-methylcyclohexylcyclo-pentyldimethoxysilane |

The above-mentioned solid catalyst component (A) is a component of the catalyst for polymerization of olefins which can provide polyolefins particularly having a broad molecular weight distribution and a high stereoregularity at a high yield. The solid catalyst component as described below can provide a stereoregular polymer having a density of from 0.900 to 0.906 g/ml at a low RDS and yet at a high yield, with suppressing formation of fine powders.

Polymerization reaction may be carried out in the presence or absence of an organic solvent. The olefin monomer to be polymerized may be used in either a gaseous state or a liquid state. The polymerization is conducted at a temperature of not higher than 200°C, preferably not higher than 100°C, under a pressure of not higher than 10 MPa, preferably not higher than 5 MPa. The reaction may be effected either in a continuous system or in a batch system and through one step or two or more steps.

The olefins to be homo- or copolymerized are not particularly limited and generally have 2 to 20 carbon atoms, such as ethylene, propylene, 1-butene, 1-pentene, 4-methyl-1-pentene, and vinylcyclohexane. These olefins may be used either individually or in combination of two or more thereof. The effects of the present invention in assuring high stereoregularity, broad molecular weight distribution, and high yield are particularly pronounced in homopolymerization of propylene or copolymerization of propylene and ethylene.

For ensuring the improvements in catalytic activity and stereoregularity and particle properties of the polymer produced, it is preferable to conduct pre-polymerization prior to substantial polymerization. Monomers to be pre-polymerized include not only ethylene and propylene but other monomers, such as styrene and vinylcyclohexane.

The catalyst used in the present invention is used in an amount of 0.005 to 0.5 mmol, preferably 0.01 to 0.5 mmol, calculated as titanium atom in solid catalyst component (A) per liter of the polymerization.zone.

By using the catalyst of the present invention, the olefin polymers obtained have a broader molecular weight distribution than those obtained by conventional processes, by at least 1 higher as expressed in terms of the ratio of weight average molecular weight to number average molecular weight (Mw/Mn) of the olefin polymers, and the yield

of stereoregular polymers is extremely high. That is, the process has been confirmed to provide polyolefins having not only broad molecular weight distribution (for example, 6 or higher in terms of the Mw/Mn) but high stereoregularity in extremely high yield.

The present invention will now be illustrated in greater detail with reference to Examples in view of Comparative Examples, All the percents are by weight unless otherwise indicated.

EXAMPLE 1

Into a 2-liter four-necked flask equipped with a stirrer, thermometer, Dimroth condenser, and dropping funnel was introduced 18.5 g (0.76 mol) of magnesium shavings. The magnesium *was* dried in an argon stream, and 20 ml of di-n-butyl ether was then added thereto. The contents were cooled to room temperature, and a small amount of 1,2-dibromoethane was added thereto to activate the magnesium. A solution prepared by dissolving 79.6 g (0.76 mol) of cyclopentyl chloride in 600 ml of di-n-butyl ether was then added dropwise over a period of 3.5 hours, during which the temperature of the system spontaneously increased to 50°C. Subsequently, 143.0 g (0.70 mol) of cyclohexyltrimethoxysilane was added thereto at room temperature, and the reaction was then conducted for 1 hour under reflux.

After completion of the reaction, the reaction mixture was cooled to room temperature, and 372 g (0.38 mol) of a 10% aqueous sulfuric acid solution was added thereto dropwise at a temperature of 40°C or lower. The organic layer was washed with 300 ml of a 1% aqueous sodium hydrogen carbonate solution and then dried over anhydrous magnesium sulfate. After the drying agent was filtered off, vacuum distillation was performed to obtain 143.6 g of a fraction having a boiling point of 78°C at 0.2 Torr. The yield was 84.6%. This reaction product was ascertained to be cyclohexylcyclopentyldimethoxysilane by MS, two-dimensional analysis with $^{1}H$-NMR/$^{13}C$-NMR, and IR. The results of MS, $^{1}H$-NMR/$^{13}C$-NMR (COSY spectrum), and IR are shown in Figs. 1, 2, and 3, respectively.

The analyses by MS, $^{1}H$-NMR/$^{13}C$-NMR, and IR were carried out under the following conditions.

MS: apparatus ... Finigan Mat (GC-MS).
$^{1}H$-NMR/$^{13}C$-NMR: apparatus ... JEOL GSX270,
solvent ... $CDCl_3$.
IR: apparatus ... Perkin Elmer 1600 Series (FT-IR),
KBr sand method.

EXAMPLE 2

Preparation of Solid Catalyst Component:

10 g of diethoxymagnesium, 1.5 g of aluminium trichloride and 90 ml of toluene were put in a 500-ml round flask equipped with a stirrer, which had been fully purged with nitrogen gas, and they were mixed to prepare a suspension. Then, 22 ml of titanium tetrachloride (maintained at a room temperature) was added therein, and the temperature was increased to 80°C while stirring to carry out a reaction. Next, 3.0 ml of di-n-butyl phthalate was added, and the temperature was further increased to 110°C to continue the reaction for 2 hours. Thereafter, a supernatant of the resulting suspension was removed, and the residue was washed three times with 88 ml of toluene at 75°C. Subsequently, 89 ml of toluene and 22 ml of titanium tetrachloride were added thereto, and processing was carried out at 100°C for 1.5 hour while stirring, followed by washing eight times with 83 ml cf heptane at 40°C, whereby a solid catalyst component having a Ti content of 3.8 % by weight and an A1 content of 0.5 % by weight was obtained.

Preparation of Catalyst and Polymerization of Propylene:

700 ml of n-heptane was put in a 1800-ml stainless steel autoclave equipped with a stirrer, which had been fully dried with nitrogen gas and replaced with propylene gas. Under the propylene gas atmosphere , 2.10 mmol of triethylaluminium, 0.21 mmol of phenyl triethoxysilane and 0.084 mmol (in terms of Ti) of the above-prepared solid catalyst component were put therein in the autoclave, whereby a catalyst was prepared. Thereafter, a propylene pressure was adjusted to 0.2 MPa, and preliminary polymerization of propylene was carried out at 20°C for 30 minutes with stirring. 30 ml of hydrogen gas was then introduced in the autoclave, and the propylene pressure in the system was adjusted to 0.7 MPa to continue the polymerization at 70°C for 2 hours. The pressure, which decreased as the polymerization of propylene proceeded, was supplemented by continuously supplying only propylene to keep the pressure constant during the polymerization. The polymer thus produced was filtered off and dried under reduced pressure to obtain a solid polymer.

Measurement of Properties of Catalyst:

A filtrate separated from the solid polymer was concentrated to obtain the polymer dissolved in the solvent, and the amount of the polymer was designated as (A), while the amount of the solid polymer was designated as (B). Further, the solid polymer obtained was extracted in boiled n-heptane for 6 hours to obtain a polymer insoluble in n-heptane, and the amount thereof was designated as (C). The properties of the catalyst were calculated from these values (A), (B) and (C), as described below.
Polymerization activity (Y) per unit amount of solid catalyst component:

$$Y = [(A) + (B)](g)/\text{amount of solid catalyst component (g)}$$

$$(RDS) = (A)(g)/[(A) + (B)](g)$$

Yield (t-II) of a whole crystalline polymer:

$$(t\text{-}II) = (C)(g)/[(A) + (B)](g)$$

Further, a density (ρ), a melt index (MI) (measured by the method according to JIS K7210) and a bulk density (BD) of the resulting solid polymer were measured, and the results are shown in Table 2, together with the above-measured properties of the catalyst.

EXAMPLE 3

Preparation of Solid Catalyst Component:

10 g of diethoxymagnesium and 90 ml of toluene were put in a 500-ml round flask equipped with a stirrer, which had been fully replaced with nitrogen gas, to prepare a suspension. Then, 20 ml of titanium tetrachloride was added therein, and the temperature was increased to 70°C while stirring to carry out the reaction. Next, 4.0 ml of di-i-octyl phthalate was added, and the temperature in the system was further increased to 110°C to continue the reaction for 2 hours. After completion of the reaction, a supernatant of the resulting suspension was removed, and the residue was washed three times with 88 ml of toluene at 75°C. Thereafter, 80 ml of toluene, 2.0 g of aluminium trichloride and 30 ml of titanium tetrachloride were added, and the reaction was carried out at 105°C for 2 hours with stirring, followed by washing eight times with 80 ml of heptane at 40°C, whereby a solid catalyst component having a Ti content of 3.4 % by weight and an Al content of 0.7 % by weight was obtained.

Preparation of Catalyst and Polymerization of Propylene:

Propylene was polymerized in the same manner as that in Example 2, except that phenyl triethoxysilane was replaced with dicyclohexyl dimethoxysilane, and the results are shown in Table 2.

EXAMPLE 4

Preparation of Solid Catalyst Component:

10 g of diethoxymagnesium, 0.8 g of aluminium trichloride and 90 ml of toluene were put in a 500-ml round flask equipped with a stirrer, which has been fully purged with nitrogen gas, to prepare a suspension. Then, 22 ml of titanium tetrachloride was added therein, -and the temperature was increased to 80°C while stirring to carry out the reaction. Next, 2.8 ml of di-i-octyl phthalate was added, and the temperature was further increased to 110°C to continue the reaction for 2 hours. After completion of the reaction, a supernatant of the resulting suspension was removed, and the residue was washed twice with 88 ml of toluene at 75°C. Thereafter, 0.8 g of aluminium trichloride, 89 ml of toluene and 22 ml of titanium tetrachloride were added, and the processing was carried out at 100°C for 1.5 hour while stirring, followed by washing eight times with 83 ml of heptane at 40°C, whereby a solid catalyst component having a Ti content of 2.9 % % by weight and an Al content of 0.8 % by weight was obtained.

Preparation of Catalyst and Polymerization of Propylene:

Propylene was polymerized in the same manner as that in Example 2, except that phenyl triethoxysilane was replaced with cyclohexyl methyl dimethoxysilane, and the results are shown in Table 2.

COMPARATIVE EXAMPLE 1

A solid catalyst component was prepared and polymerization of propylene was carried out in the same manner as in Example 2, except that aluminium trichloride was not used. The results obtained are shown in Table 2.

COMPARATIVE EXAMPLE 2

A solid catalyst component was prepared in the same manner as in Example 2, except that aluminium trichloride was not used and the amount of di-n-butyl phthalate was changed to 2.0 ml. The resulting solid catalyst component had a Ti content of 5.5 % by weight.

Using the solid catalyst component, polymerization of propylene was carried out in the same manner as in Example 2, and the results are shown in Table 2.

TABLE 2

| | Ex.2 | Ex.3 | Ex.4 | Comp.Ex.1 | Comp.Ex.2 |
|---|---|---|---|---|---|
| Polymerization activity (Y) | 11,500 | 13,000 | 26,000 | 11,700 | 10,700 |
| RDS* | 1.0 | 0.9 | 0.8 | 0.5 | 4.5 |
| Yield of whole crystalline polymer (t-II) | 96.1 | 95.4 | 95.5 | 98.2 | 92.6 |
| Density of polymer (ρ: g/ml) | 0.9052 | 0.9048 | 0.9045 | 0.9080 | 0.9049 |
| Melt index of polymer (MI: g/10 min) | 3.7 | 3.5 | 1.9 | 2.2 | 4.0 |
| Bulk density of polymer (BD: g/ml) | 0.41 | 0.40 | 0.39 | 0.40 | 0.38 |

(* in n-heptane)

It is seen from the results shown in Table 2 that the use of the solid catalyst component of the present invention produces polypropylene having a density of not more than 0.906 g/ml at a low RDS of 3% or less.

EXAMPLE 5

Preparation of Solid Catalyst Component:

10 g of diethoxymagnesium, 1.5 g of triethoxyaluminium and 90 ml of toluene were put in a 500-ml round flask equipped with a stirrer, which had been fully purged with nitrogen gas, to prepare a suspension. Then, 30 ml of titanium tetrachloride was added therein, and the temperature was increased to 80°C while stirring to carry out the reaction. Next, 3.0 ml of di-n-butyl phthalate was added, and the temperature was further increased to 110°C to continue the reaction for 2 hours. After completion of the reaction, a supernatant of the resulting suspension was removed, and the residue was washed three times with 90 ml of toluene at 75°C. Thereafter, 90 ml of toluene and 30 ml of titanium tetrachloride were added, and the processing was carried out at 100°C for 2 hours while stirring, followed by washing eight times with 80 ml of heptane at 40°C, whereby a solid catalyst component having a Ti content of 5.5 % by weight and an Al content of 0.8 % by weight was obtained.

Preparation of Catalyst and Polymerization of Propylene:

Propylene was polymerized in the same manner as that in Example 2, except that phenyl triethoxysilane was replaced with cyclohexyl methyl dimethoxysilane. The results are shown in Table 3.

EXAMPLE 6

A solid catalyst component was prepared in the same manner as that in Example 5, except that triethoxyaluminium was replaced with trisopropoxyaluminium. Using the solid catalyst component, polymerization of propylene was carried out in the same manner as in Example 5, and the results are shown Table 3.

EXAMPLE 7

A solid catalyst component was prepared in the same manner as that in Example 5, except that triethoxyaluminium was replaced with ethoxydichloroaluminium. Using the solid catalyst component polymerization of propylene was carried out in the same manner as in Example 5, and the results are shown in Table 3.

EXAMPLE 8

Preparation of Solid Catalyst Components:

10 g of diethoxymagnesium, 1.5 g of triisopropoxy-aluminium and 90 ml of toluene were put in a 500-ml round flask equipped with a stirrer, which had been fully purged with nitrogen gas, to prepare a suspension. 30 ml of titanium tetrachloride was added therein, and the temperature was increased to 80°C with stirring to carry out the reaction. Next, 3.5 ml of di-i-octyl phthalate was added, and the temperature was further increased 110°C to continue the reaction for 2 hours. After completion of the reaction, a supernatant of the resulting suspension was removed, and the residue was washed with 90 ml of toluene at 75°C. Thereafter, 0.5 g of ethoxydichloroaluminium, 90 ml of toluene and 30 ml of titanium tetrachloride were added, and the processing was carried out at 100°C for 2 hours while stirring, followed by washing eight times with 80 ml of heptane at 40°C, whereby a solid catalyst component having a Ti content of 4.2 % by weight and an Al content of 0.8 % by weight was obtained.

Preparation of Catalyst and Polymerization of Propylene:

Propylene was polymerized in the same manner as that in Example 5, except that 0.0053 mmol in terms of Ti of the above-prepared solid catalyst component Ti was used, and the results are shown in Table 3

COMPARATIVE EXAMPLE 3

A solid catalyst component was prepared and polymerization of propylene was carried out in the same manner as in Example 5, except that triethoxyaluminium was not used. The results obtained are shown in Table 3.

TABLE 3

| | Ex. 5 | Ex. 6 | Ex. 7 | Ex. 8 | Comp. Ex. 3 |
|---|---|---|---|---|---|
| Polymerization activity (Y) | 24,200 | 26,100 | 28,900 | 25,700 | 24,500 |
| RDS* | 1.5 | 1.2 | 1.0 | 1.4 | 0.5 |
| Yield of whole crystalline polymer (t-II) | 95.0 | 95.3 | 95.4 | 94.8 | 98.5 |
| Density of polymer (ρ: g/ml) | 0.9050 | 0.9052 | 0.9048 | 0.9047 | 0.9078 |
| Melt index of polymer (MI: g/10 min) | 4.0 | 2.8 | 1.8 | 1.5 | 1.8 |
| Bulk density of polymer (BD: g/ml) | 0.40 | 0.41 | 0.40 | 0.40 | 0.40 |
| Ti content (wt%) | 5.5 | 5.2 | 3.5 | 4.2 | 2.5 |
| Al content (wt%) | 0.8 | 0.7 | 0.6 | 0.8 | - |

(* in n-heptane)

EXAMPLE 9

Preparation of Solid Catalyst Component:

10 g of diethoxymagnesium, 1.5 g of aluminium trichloride and 90 ml of toluene were put in a 500-ml round flask equipped with a stirrer, which had been fully purged with nitrogen gas, to prepare a suspension. Then, 22 ml of titanium tetrachloride was added therein, and the temperature was increased to 80°C while stirring to carry out the reaction. Next, 3.3 ml of di-n-butyl phthalate and 3.0 ml of dimethyl polysiloxane having a viscosity of 50 cst at room temperature were added, and the temperature was further increased to 110°C to continue the reaction for 2 hours. After completion of the reaction, a supernatant of the resulting suspension was removed and the residue was washed three times with 88 ml of toluene at 75°C. Thereafter, 89 ml of toluene and 22 ml of titanium tetrachloride were added, and the processing was carried out at 100°C for 1.5 hour while stirring, followed by washing eight times with 83 ml of heptane at 40°C, whereby a solid catalyst component having a Ti content of 3.3 % by weight and an Al content of 0.5 % by weight was obtained.

Preparation of Catalyst and Polymerization of Propylene:

Using the above-prepared solid catalyst component, polymerization of propylene was carried out in the same manner as in Example 8, and the results are shown in Table 4.

EXAMPLE 10

Preparation of Solid Catalyst Components:

10 g of diethoxymagnesium, 1.0 g of aluminium trichloride and 90 ml of toluene were put in a 500-ml round flask equipped with a stirrer, which had been fully purged with nitrogen gas, to prepare a suspension. Then, 20 ml of titanium tetrachloride was added therein, and the temperature was increased 50°C while stirring to carry out the reaction. Next, 4.5 ml of di-i-octyl phthalate was added, and the temperature was added to continue the reaction for 2 hours. After completion of the reaction, a supernatant of the resulting suspension was removed, and the residue was washed three times with 88 ml of toluene at 75°C. Thereafter, 80 ml of toluene, 1.0 g of aluminium chloride and 30 ml of titanium tetrachloride were added, and the reaction was carried out at 105°C for 2 hours while stirring, followed by washing eight times with 80 ml of heptane at 40°C, whereby a solid catalyst component having a Ti content of 2.9 % by weight and an Al content of 0.8 % by weight was obtained.

Preparation of Catalyst and Polymerization of Propylene:

Propylene was polymerized in the same manner as in Example 8, except that cyclohexyl methyl dimethoxysilane was replaced with diphenyl dimethoxysilane, and the results are shown in Table 4.

EXAMPLE 11

Preparation of Solid Catalyst Component:

10 g of diethoxymagnesium, 0.8 g of aluminium trichloride and 90 ml of toluene were put in a 500-ml round flask equipped with a stirrer, which had been fully purged with nitrogen gas, to prepare a suspension. Thus, 22 ml of titanium tetrachloride was added therein, and the temperature was increased to 80°C while stirring to carry out the reaction. Next, 4.8 ml of di-i-octyl phthalate was added, and the temperature was further increased to 110°C, and then 6.0 ml of dimethyl polysiloxane having a viscosity of 100 cst at room temperature was added to continue the reaction for 2 hours. After completion of the reaction, a supernatant of the resulting suspension was removed, and the residue was washed twice with 88 ml of toluene at 75°C. Thereafter, 0.8 g of aluminium chloride, 89 ml of toluene and 22 ml of titanium tetrachloride were added, and the processing was carried out at 100°C for 1.5 hour while stirring, followed by washing eight times with 83 ml of heptane at 40°C, whereby a solid catalyst component having a Ti content of 2.5 % by weight and an Al content of 0.8 % by weight was obtained.

Preparation of Catalyst and Polymerization of Propylene:

Using the above-prepared solid catalyst component, propylene was polymerized in the same manner as in Example 8, except that cyclohexyl methyl dimethoxy silane was replaced with cyclohexyl cyclopentyl dimethoxy silane, and the results are shown in Table 4.

COMPARATIVE EXAMPLE 4

A solid catalyst component was prepared and the polymerization of propylene was carried out in the same manner as in Example 9, except that aluminium trichloride and dimethyl polysiloxane were not used. The results obtained are shown in Table 4.

TABLE 4

| | Ex. 9 | Ex. 10 | Ex. 11 | Comp. Ex. 4 |
|---|---|---|---|---|
| Polymerization activity (Y) | 37,500 | 43,000 | 42,000 | 22,800 |
| RDS* | 0.7 | 0.5 | 0.5 | 1.0 |

(* in n-heptane)

TABLE 4 (continued)

| | Ex. 9 | Ex. 10 | Ex. 11 | Comp. Ex. 4 |
|---|---|---|---|---|
| Yield of whole crystalline polymer (t-II) | 95.6 | 96.3 | 96.1 | 98.5 |
| Density of polymer (ρ: g/ml) | 0.9042 | 0.9051 | 0.9038 | 0.9075 |
| Melt index of polymer (MI: g/10 min) | 2.5 | 1.7 | 3.0 | 1.9 |
| Bulk density of polymer (BD: g/ml) | 0.41 | 0.38 | 0.38 | 0.40 |
| Content of fine powder (100 μ or less in diameter) | 1.0 | 1.5 | 1.5 | 9.0 |

EXAMPLE 12

Preparation of Solid Catalyst Component:

10 g of diethoxymagnesium and 90 ml of toluene were put in a 500-ml round flask equipped with a stirrer, which had been fully purged with nitrogen gas, to prepare a suspension. Then, 20 ml of titanium tetrachloride was added therein, and the temperature was increased to 50°C while stirring to carry out the reaction. Next, 4.5 ml of di-i-octyl phthalate was added, and the temperature was further increased to 110°C, and then 4.0 ml of dimethyl polysiloxane having a viscosity of 50 cst at room temperature was added to continue the reaction for 2 hours. After completion of the reaction, a supernatant of the resulting suspension was removed, and the residue was washed three times with 88 ml of toluene at 75°C. Thereafter, 80 ml of toluene, 1.0 g of aluminium trichloride and 30 ml of titanium tetrachloride were added, and the reaction was carried out at 105°C for 2 hours while stirring, followed by washing eight times with 80 ml of heptane at 40°C, whereby a solid catalyst component having a Ti content of 2.6 % by weight and an Al content of 0.7 % by weight was obtained.

Preparation of Catalyst and Polymerization of Propylene:

20 ml of n-heptane was put in a 2000-ml stainless steel autoclave equipped with a stirrer, which had been fully dried with nitrogen gas and then purged with propylene gas. Under the propylene gas atmosphere, 1.32 mmol of triethylaluminium, 0.13 mmol of cyclohexyl methyl dimethoxysilane and 0.0033 mmol (in terms of Ti) of the above-prepared solid catalyst component were added therein, whereby a catalyst was prepared. Thereafter 1,400 ml of liquefied propylene was added therein, and the mixture was stirred at 20°C for 5 minutes. 1500 ml of hydrogen gas was introduced with stirring, and then the temperature in the system was immediately increased to 70°C to carry out the polymerization for 1 hour, whereby 224 g of polypropylene was obtained.

A polymerization activity, which was expressed by a polymer yield per g of the solid catalyst component in a polymerization time of 1 hour, was 37,300 g/g-cat. For evaluation of stereoregularity of the polymer obtained, a content of insoluble polymer after boiling in n-heptane for 6 hours was measured, and it was 95.5%. Further, it was found that the polymer obtained had a density of 0.9052, an average particle size of 400 μm, a bulk density of 0.42 g/ml, and a melt index of 9.4g/10 min. Furthermore, the content of fine powder of 100 micron or less in diameter was 1.5 % by weight.

As described above, when olefins, particularly propylene, are polymerized with the catalyst comprising the solid catalyst component of the present invention, the catalic activity is sufficiently high, so that a residual amount of the catalyst present in the resulting polymer can be suppressed to a very low level, and accordingly, a residual chlorine amount in the resulting polymer can be reduced to an extent that a step of removing such contaminates can be omitted. A density of resulting stereoregular polypropylene can stably be controlled with in the range of 0.900 to 0.906 g/ml without changing a process parameter in a polymerization reaction to a large extent, and a polymer suited for a film or sheet formation can readily be produced. Further, in the case where the polymerization is carried out in the presence of the catalyst, the content of fine powders in the resulting polymer can be reduced, and therefore, troubles on a process operation due to such fine powders can be prevented.

Since the RDS rate can be controlled very low, an posttreatment of a polymer produced by the slurry method and a refining process for a polymerization solvent used in the slurry method, can be simplified, resulting in cost reduction such as saving of energy in an operation. Further, the catalyst comprising the solid catalyst component of the present invention has a long life with respect to the polymerization activity, enabling steady control of the polymerization process.

The solid catalyst component can be prepared by a simple process without any specific additional equipments and exhibits a stable quality with a good reproducibility. Further, the solid catalyst component is advantageous because of its low production cost owing to use of inexpensive materials and a fast settling speed in a washing process as well

as a small loss of solid materials during the process.

## Claims

**1.** A solid catalyst component for polymerizing olefins, said catalyst component being obtainable by a process comprising contacting the following substances (a) to (d) in the following contact orders (1) to (5):

(a) a dialkoxymagnesium represented by $Mg(OR^6)_2$, wherein $R^6$ represents a straight chain or branched chain alkyl group or an aryl group;
(b) an aluminum compound represented by $Al(OR^7)_mX^2{}_{3-m}$, wherein $R^7$ represents a straight chain or branched chain alkyl group; $X^2$ represents a halogen atom; and m is 0 or integer of 1 to 3;
(c) titanium tetrachloride; and
(d) a diester of aromatic dicarboxylic acid,

(1) the substance (c) is contacted to a product obtained by contacting the substances (a), (b). (c) and (d);
(2) the substance (d) is contacted to a product obtained by contacting the substances (a), (b) and (c) in advance, and then the substance (c) is further contacted;
(3) the substance (b) is contacted to a product obtained by contacting the substances (a), (c) and (d) in advance, and then the substance (c) is further contacted.
(4) the substance (b) is contacted to a product obtained by contacting the substances (a), (c) and (d) in advance, and then the substances (b) and (c) are further contacted; and
(5) the substances (b) and (c) are contacted to a product obtained by contacting the substances (a), (b), (c) and (d) in advance.

**2.** The solid catalyst component of claim 1, wherein the substance (b) is trihalogenated aluminum.

**3.** A catalyst for the polymerization of olefins comprising the solid catalyst component of claim 1 or 2, an organoaluminum compound, and an organosilicon compound.

## Patentansprüche

**1.** Fester Katalysatorbestandteil zum Polymerisieren von Olefinen, wobei der Katalysatorbestandteil durch ein Verfahren erhalten werden kann, welches das Inkontaktbringen der folgenden Substanzen (a) bis (d) in den folgenden Kontaktreihenfolgen (1) bis (5) umfasst:

(a) ein Dialkoxymagnesium, das durch $Mg(OR^6)_2$ wiedergegeben wird, worin $R^6$ eine geradkettige oder verzweigte Alkylgruppe oder eine Arylgruppe bedeutet;

(b) eine Aluminiumverbindung, die durch $Al(OR^7)_mX^2{}_{3-m}$ wiedergegeben wird, wobei $R^7$ eine geradkettige oder verzweigte Alkylgruppe bedeutet; $X^2$ ein Halogenatom bedeutet; und m 0 oder eine ganze Zahl von 1 bis 3 ist;

(c) Titantetrachlorid; und

(d) ein Diester einer aromatischen Dicarbonsäure,

(1) die Substanz (c) wird mit einem Produkt in Kontakt gebracht, das durch Inkontaktbringen der Substanzen (a), (b), (c) und (d) erhalten wird;

(2) die Substanz (d) wird mit einem Produkt in Kontakt gebracht, das durch Inkontaktbringen der Substanzen (a), (b) und (c) im Voraus erhalten wird, und anschließend wird die Substanz (c) weiterhin in Kontakt gebracht;

(3) die Substanz (b) wird mit einem Produkt in Kontakt gebracht, das durch Inkontaktbringen der Substanzen (a), (c) und (d) im Voraus erhalten wird, und anschließend wird die Substanz (c) weiterhin in Kontakt gebracht;

(4) die Substanz (b) wird mit einem Produkt in Kontakt gebracht, das durch Inkontaktbringen der Substanzen (a), (c) und (d) im Voraus erhalten wird, und anschließend werden die Substanzen (b) und (c) weiterhin in Kontakt gebracht; und

(5) die Substanzen (b) und (c) werden mit einem Produkt in Kontakt gebracht, das durch Inkontaktbringen der Substanzen (a), (b), (c) und (d) im Voraus erhalten wird.

**2.** Fester Katalysatorbestandteil nach Anspruch 1, wobei die Substanz (b) trihalogeniertes Aluminium ist.

**3.** Katalysator für die Polymerisation von Olefinen, umfassend den festen Katalysatorbestandteil nach Anspruch 1 oder 2, eine Organoaluminiumverbindung und eine Organosiliciumverbindung.

**Revendications**

**1.** Composant de catalyseur solide pour polymériser des oléfines, ledit composant de catalyseur pouvant être obtenu par un procédé comprenant la mise en contact des substances (a) à (d) suivantes, dans les ordres de contact (1) à (5) suivants :

(a) un dialcoxy-magnésium représenté par $Mg(OR^6)_2$, dans lequel $R^6$ représente un groupe alkyle à chaîne droite ou à chaîne ramifiée ou un groupe aryle ;
(b) un composé de l'aluminium représenté par $Al(OR^7)_mX^2_{3-m}$ dans lequel $R^7$ représente un groupe alkyle à chaîne droite ou à chaîne ramifiée ; $X^2$ représente un atome d'halogène ; et m vaut 0 ou est un entier de 1 à 3 ;
(c) le tétrachlorure de titane ; et
(d) un diester d'acide dicarboxylique aromatique,

(1) la substance (c) est mise au contact d'un produit obtenu par mise en contact des substances (a), (b), (c) et (d) ;
(2) la substance (d) est mise au contact d'un produit obtenu par mise en contact des substances (a), (b) et (c) à l'avance, et ensuite la substance (c) est de nouveau mise en contact ;
(3) la substance (b) est mise au contact d'un produit obtenu par mise en contact des substances (a), (c) et (d) à l'avance, et ensuite la substance (c) est de nouveau mise en contact ;
(4) la substance (b) est mise au contact d'un produit obtenu par mise en contact des substances (a), (c) et (d) à l'avance, et ensuite les substances (b) et (c) sont de nouveau mises en contact ; et
(5) les substances (b) et (c) sont mises au contact d'un produit obtenu par mise en contact des substances (a), (b), (c) et (d) à l'avance.

**2.** Composant de catalyseur solide selon la revendication 1, dans lequel la substance (b) est l'aluminium trihalogéné.

**3.** Catalyseur pour la polymérisation d'oléfines, comprenant le composant de catalyseur solide de la revendication 1 ou la revendication 2, un composé organique de l'aluminium, et un composé organique du silicium.

FIG. 1

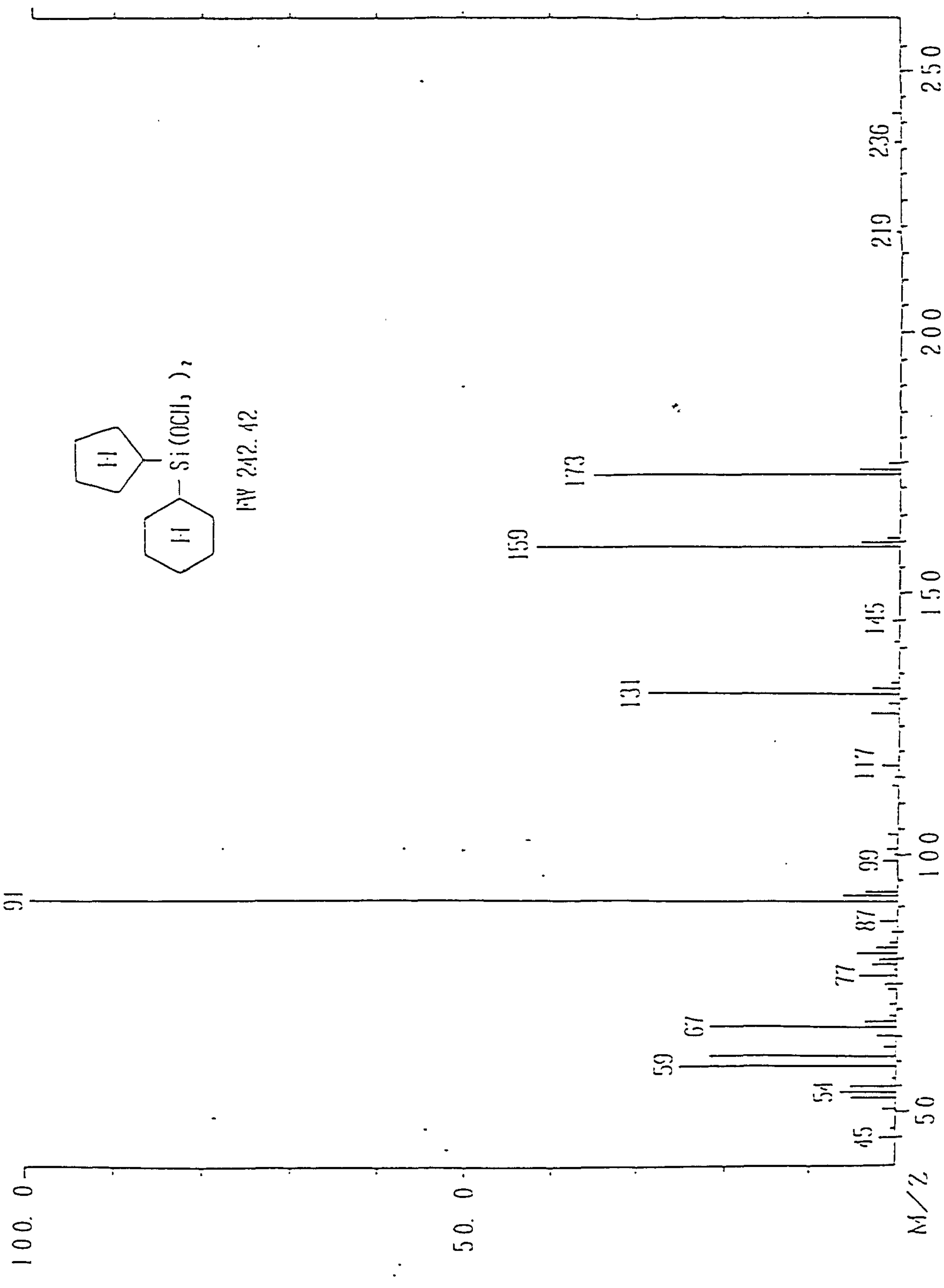
100.0
50.0
M/Z
50
100
150
200
250
45
54
59
67
77
87
91
99
117
131
145
159
173
219
236
FW 242.42

FIG. 2

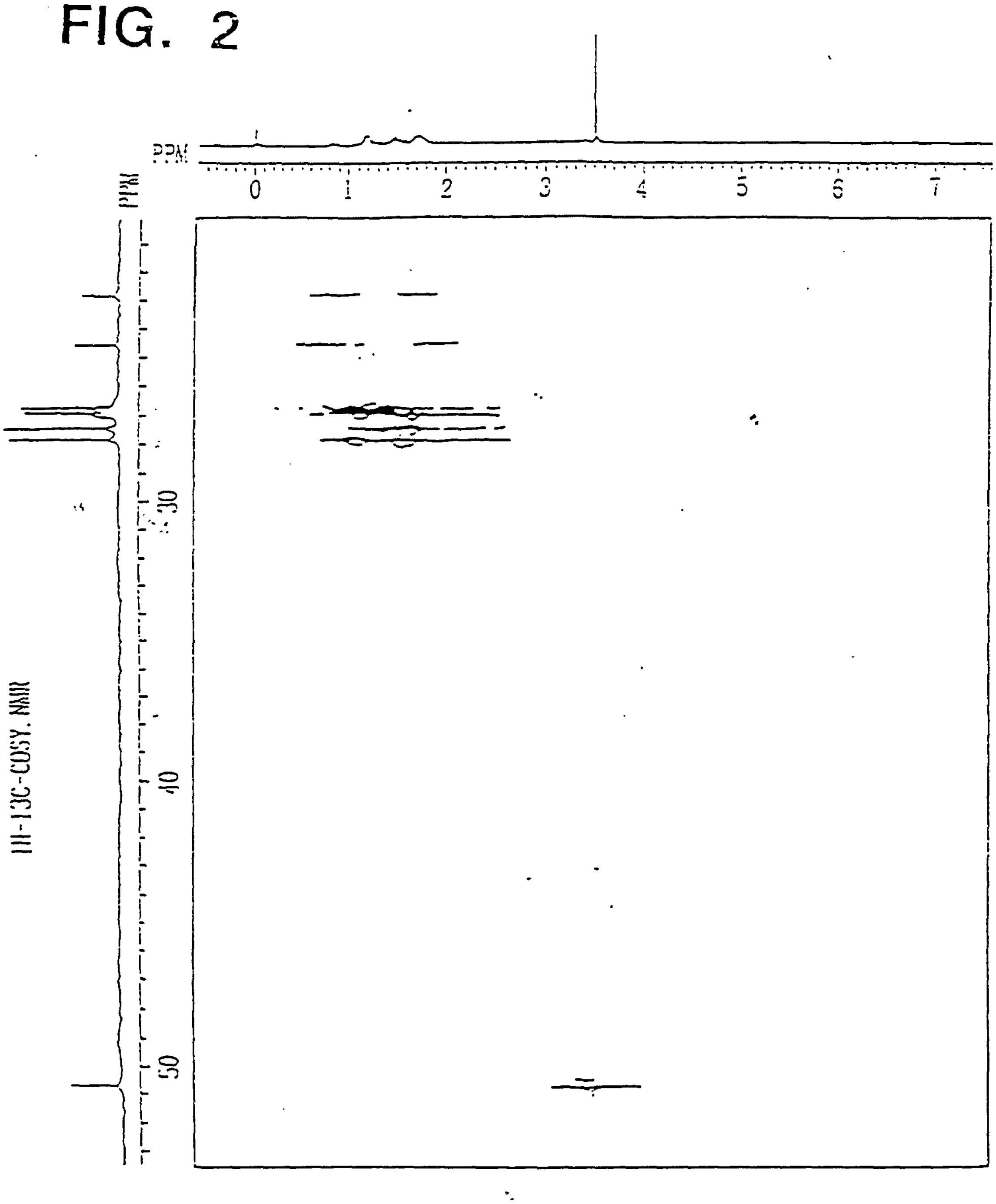

FIG. 3

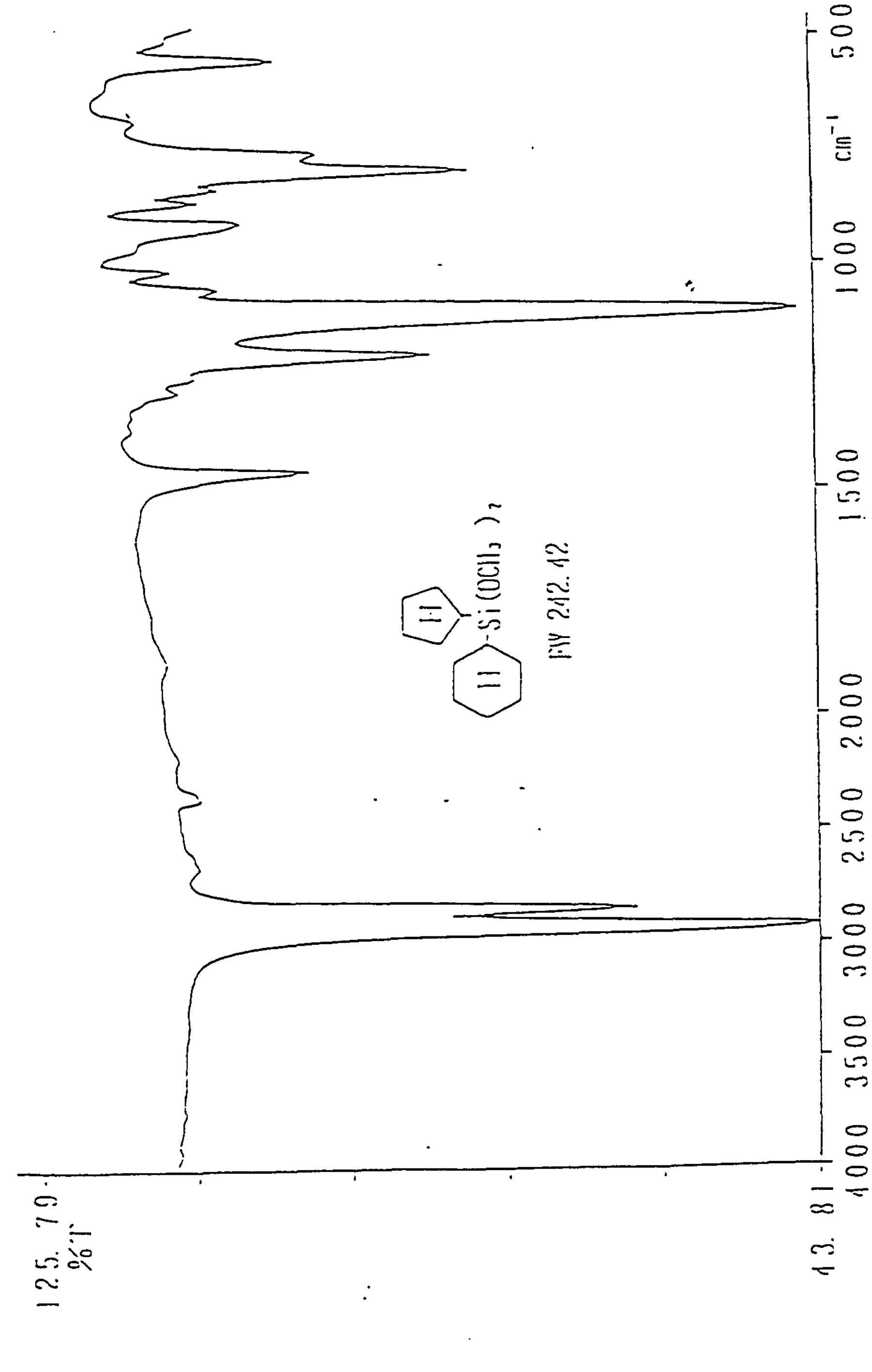
125.79
%T
43.81
4000
3500
3000
2500
2000
1500
1000
500
cm⁻¹
FW 242.42